# EUROPEAN PATENT APPLICATION

(11) **EP 1 533 707 A2**
(43) Date of publication of application: **25.05.2005**
(21) Application number: 04104135.1
(22) Date of filing: 27.08.2004
(51) Int. Cl.: G06F 13/36

(54) **A method of sharing a resource device**

(30) Priority: 02.09.2003 KR 2003061083
(71) Applicant: Samsung Electronics Co., Ltd., Suwon-si, Gyeonggi-Do 442-742 (KR)
(72) Inventor: Yu, In-chul, Yeongtong-gu, Suwon-si, Gyeonggi-do (KR)
(74) Representative: Read, Matthew Charles

(57) **Abstract**

The present invention provides a method and apparatus enabling multiple CPU systems to independently access a shared device, each of the multiple CPU systems having data I/O lines, a reset line, a clock line and the like without requiring an additional switching logic or circuit. The method of sharing the device among multiple CPU systems according to an embodiment of the present invention comprises setting interfaces of all the systems to a floating state, determining the status of a PIO indicating whether it is possible to access the device, and the status of the PIO to an access-disable state. The method of sharing the device among multiple CPU systems further comprises changing the status of an interface of a first system, which intends to access the device, so that communications can be made between the first system and the device, and transmitting and receiving data between the first system and the device.

## Description

The present invention relates to a system comprising a resource device and a plurality of resource-user devices, a common signal path means connected to the resource device and means for preventing simultaneous communication with the resource device via the common signal path means by the resource-user devices.

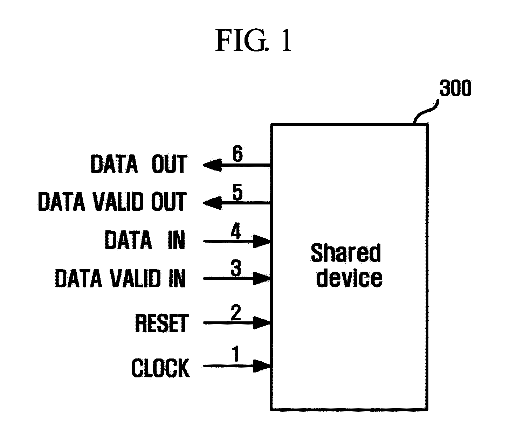

Figure 1 shows the input/output (I/O) terminals of a device that multiple systems intend to share with one another.

Generally, known I/O lines of the device include a CLOCK line 1, a RESET line 2, a DATA VALID IN line 3, a DATA VALID OUT line 5, a DATA IN line 4 and a DATA OUT line 6. The device may include further I/O lines.

The CLOCK line 1 receives a clock signal from a system and the RESET line 2 functions to receive a reset (initialization) signal. Further, the DATA VALID IN line 3 and the DATA VALID OUT line 5 function to input and output a DATA VALID signal indicating a valid section of received or transmitted data, respectively. Moreover, the DATA IN line 4 and DATA OUT line 6 function to input and output data signals that are actually received or transmitted, respectively.

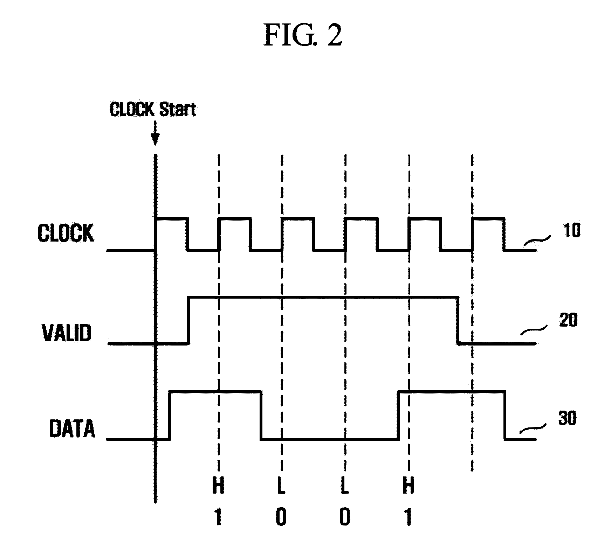

Figure 2 is a timing diagram illustrating the relationship between a clock signal 10, a DATA VALID signal 20 and a data signal 30. As shown in Figure 2, the data, contained within the data signal 30 begins to be transmitted just after the clock signal 10 starts. It should be appreciated that the data signal 30 can be transmitted or received prior to the start of the clock signal. However, such transmitted or received data is ignored. In the example shown in Figure 2, the data signal is read at a point when the clock signal 10 rises from a low level to a high level; however, it is also possible that the data signal can be read at a point when the clock signal 10 falls from the high level to the low level. In addition, since the data signal 30 is recognized as valid data only when the DATA VALID signal 20 is high, the data signal is ignored when the DATA VALID signal 20 is low. In Figure 2, when the DATA VALID signal is high, the data signal 30 is read on the rising edge of the clock signal. Thus, the read data is high, low, low, high of Figure 2 can be interpreted as 1, 0, 0 and 1.

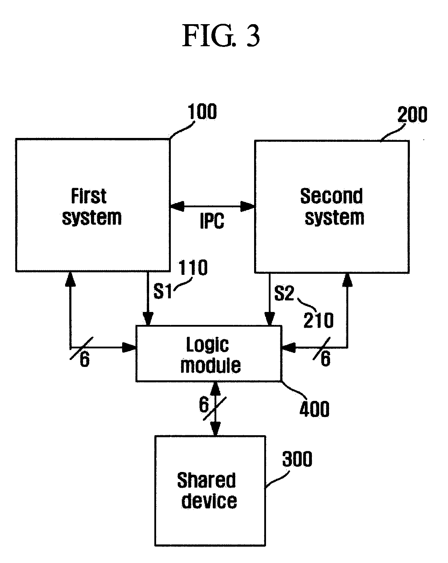

Figure 3 is a block diagram of a known system in which multiple devices utilise a shared device.

The configuration illustrated in Figure 3 comprises multiple systems 100 and 200, the shared device 300 that the systems 100 and 200 intend to share, a logic module 400, I/O lines, inter processor communication (IPC) lines and selection pins 110 and 210.

There are six I/O lines each connected to a respective terminal (1 to 6 in Figure 1) and serve as lines through which the systems 100 and 200 access the shared device. In addition, the logic module 400 functions to switch between the I/O lines. Further, the selection pins, i.e. S1 110 and S2 210, allow one of the two systems 100 and 200 to select an access path so that the system can access the shared device 300. The IPC line functions to confirm whether another system is using the shared device 300 when a given system intends to access the shared device 300.

Operation of the known system shown in Figure 3 is as follows. Assuming the first system 100, enables the selection pin 110 to determine a signal path. When one signal path is determined in such a manner, all other paths are blocked. Thereafter, a clock signal is generated driving the shared device 300 and the hardware is reset using a reset signal. A signal appears on the DATA IN line (pin 4 in Figure 1) and the DATA VALID IN line (pin 3 in Figure 3) according to a predetermined communication protocol. Then, the shared device 300 acts on the received data, and transmits the results to the first system 100 which transmitted the command, via the DATA OUT line (pin 6 in Figure 1) and the DATA VALID OUT line (pin 5 in Figure 1) according to the predetermined protocol. Thereafter, when the second system 200 intends to access the shared device 300, it confirms through the IPC whether the first system 100 is currently accessing the shared device 300. When the first system finishes using the shared device 300, the second system 200 can repeat the process of accessing the shared device 300, as described above.

A typical example of the shared device is a security device required for a conditional access device in a set-top box having two or more tuners. A single security device provided in one set-top box that includes multiple tuners, each one needing to access the security device is convenient, and the aforementioned method is applied to this type of configuration..

There are problems, however, of increasing costs due to additional circuits or logic, reliability problems resulting from path switching for signals that include the clock signal and problems of co-ordination when the systems equally access the device.

Another known method exists, wherein multiple systems independently utilize multiple devices, respectively, on the basis that two systems cannot share the input and output of a shared device and the clock signal for driving the device. However, since protocols or data formats for most security devices are not available, it is common to access the security devices independently. In this case, security is good, but a number of security devices must be installed in one set-top box with multiple CPU systems in order to provide the function of conditional access or authorization. Therefore, it is inconvenient and inefficient.

In addition, there is another known method, wherein a security device is attached to a first system 100 and a second system 200 transmits and receives data to and from the security device through an interface with the first system 100. However, there is a serious problem in that security cannot be ensured during communications between the first and second systems.

An object of the present invention is to address the above problems and/or disadvantages.

The present invention relates to a system comprising a resource device and a plurality of resource-user devices, a common signal path means connected to the resource device and means for preventing simultaneous communication with the resource device via the common signal path means by the resource-user devices.

A system according to the present invention is characterized in that the common signal path means is connected to each of said devices and the means for preventing simultaneous communication with the resource device comprises means provided in each resource-user device for signaling its use of the common signal path means to the or each other resource-user device.

This is advantageous because the requirement for the extra logic allocating access to the resource device is removed.

Also, the resource-user devices may be coupled by an access notification signal path via which the resource-user devices signal their use of the common signal path means.

Also, each resource-user device may be configured for performing a resource device access process comprising: determining from the state of access notification signal path whether the or each other resource-user device is communicating with the resource device; if the state of access notification signal path indicates that the or each other resource-user device is not communicating with the resource device, setting the state of the access notification signal path to indicate that it is communicating with the resource device and communicating with the resource device.

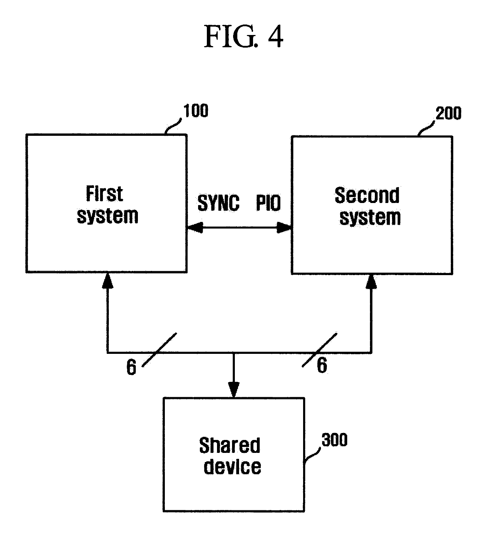

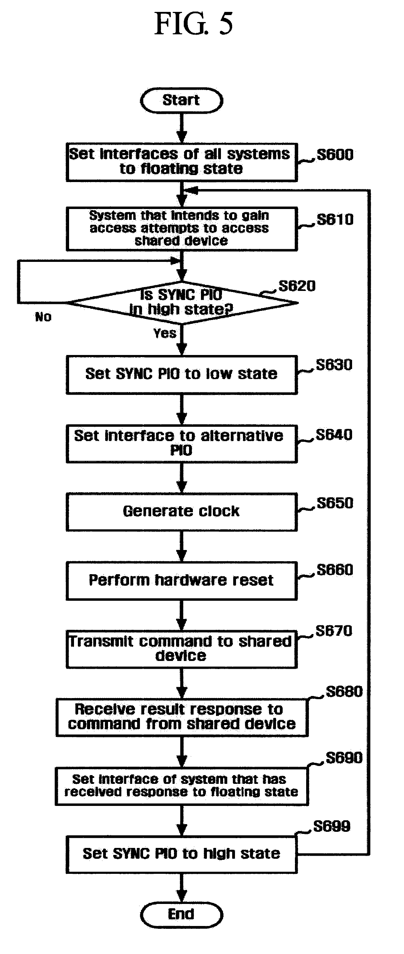

An embodiment of the present invention will now be described, by way of example only, and with reference to Figures 4 and 5, in which:
Figure 1 shows the input/output (I/O) terminals of a known device that multiple systems intend to share with one another;
Figure 2 is a known timing diagram in which data is received using a clock signal, a DATA VALID signal and a data signal;
Figure 3 is a block diagram in which multiple systems utilise a shared device in a known system;
Figure 4 is a block diagram of an apparatus according to an embodiment of the present invention; and
Figure 5 is a flowchart describing the operation of an apparatus configured according to an embodiment of the present invention.

A hardware configuration according to an embodiment of the present invention is shown in Figure 4. Six I/O lines (1 to 6 in Figure 1) required for access to a device are connected between the two systems and the device to be shared in a direct pin-to-pin manner, and a single, commonly used programmed input/output, (PIO) is provided between the first and second system 100, 200 (or the resource device user) for the purpose of synchronization of access to the shared (or resource) device. In an embodiment of the present invention, the PIO connected between the first and second system 100, 200 indicates whether either one of the first or second system 100, 200 is currently accessing the shared device. In other words, the PIO is used to make a determination on whether it is possible to access the shared device, and is defined as a "SYNC PIO". In an embodiment of the present invention, the first and second system 100, 200 are connected to each other using the SYNC PIO rather than the IPC as shown in FIG. 3. Therefore, it is necessary only to discriminate between a low logic level and a high logic level in the hardware without the use of an additionally defined protocol allowing reception and transmission of information between the two systems as used by the IPC.

Since the clock line (1 in Figure 1) corresponds to an input terminal of the shared device, a conflict inevitably occurs between the two systems if the clocks of the first and second system 100, 200 are simultaneously output to the device. Therefore, according to an embodiment of the present invention, the clock line is shared between the first and second system 100, 200 and the shared device. In other words, the clock line is connected to the first and second system and the shared device. The clock line is shared as a floating line. The clock line is an alternative PIO only in a system requesting access to the shared device, so that the requesting system can generate a clock and communicate with the shared device. Thereafter, the clock line is again placed in a floating PIO state, so that access is gained only when required and without affecting the other system. An example of a floating state is where the line is put into a state in which the logic level of the line is not determinable or where the devices ignore the value of the logic level on the line.

In an embodiment of the present invention, the input/output lines connecting the systems 100 and 200 to the shared device 300 are connected to respective interfaces of the systems 100 and 200 and the shared device 300. The interfaces can support General Purpose I/O (GPIO). Most system chips currently used support GPIO. GPIO is multiplexed to use all of the normal PIO, alternative PIO, floating PIO and the like, thereby allowing a user to select the desired mode as necessary. A normal PIO mode indicates the situation in which the user separately defines and operates each input/output terminal (1 to 6) shown in FIG.
1. The alternative PIO mode indicates the situation where the respective input/output terminals can be automatically operated when connection is made, without the user defining the respective terminals. In other words, the function of a pin will be able to change. The floating PIO mode indicates the situation in which neither a high state nor a low state is achieved.

An embodiment of the present invention enables the I/O and clock lines shared among the multiple systems to independently allow multiple accesses without conflict among the pins by using pin configurations provided by the system chips. In other words, the configuration of the pins may be subject to change depending on the function of the shared device. Since a communication protocol used in the embodiment of the present invention can be selected from amongst conventional protocols, a detailed description thereof will be omitted.

Referring to Figure 5, the method for operation of an apparatus configured according to an embodiment of the present invention begins in an initial or normal state, wherein both the first and second system set all of the lines connected with the shared device to the floating state. This is an idle state (S600). In order to ensure access of the shared device is coordinated, the PIO is always maintained in the high level before access, and falls to the low level only during access.

Next, one system (a first system) attempts to gain access to the shared device (S610). During this time, the first system determines whether the SYNC PIO is in a high state in decision step S620. If the SYNC PIO is in a low state (the "No" path from decision step S620), this means that another system is already accessing the shared device, and the first system must wait until the sync PIO is set to the high state (the "Yes" path from decision step S620).

If the SYNC PIO is a high state (the "Yes" path from decision step S620), the first system sets the SYNC PIO to the low state (S630), and sets all PIOs as alternative PIOs for interfacing with the shared device (S640). Therefore all the input/output lines (1 to 6 in FIG. 1), such as the clock line and the reset line, are set as alternative PIOs to accord to a protocol in which security is guaranteed. Although this embodiment of the present invention uses the alternative PIO, it can use the normal PIO, if necessary. Although the first system is set to the alternative PIO, other systems maintain the floating input state. Thus, an I/O conflict does not occur.

Next, in step S650, the first system generates a clock for driving the shared device 300 and applies it to the shared device 300. Then, a reset is performed using the reset line (2 in FIG.
1) to wake up the shared device 300 (S660).

Data is then transmitted to the shared device through the DATA IN line (4 in FIG. 1) and the DATA VALID IN line (3 in FIG. 1) using a predetermined protocol (S670). The shared device 300 receives and executes a command in accordance with the data. The shared device 300 then transmits the results of the execution to the system, which has transmitted the data, through the DATA OUT line (6 in FIG 1) and the DATA VALID OUT line (5 in FIG. 1) (S680).

The interface lines that have been set as the alternative PIOs between the first system and the shared device are again set to the floating state (S690). Thereafter, the SYNC PIO is switched to the high state to wait for the next access (S699).

According to an embodiment of the present invention, the apparatus in which multiple systems can access a shared device has an advantage in that since multiple systems can share the device with one another by simply configuring a circuit in a pin-to-pin manner without an additional logic circuit, material costs can be reduced.

Further, according to an embodiment of the present invention, there is an advantage in that independent access can be gained by changing only PIO configurations of system chips without changing PIOs and a protocol of a security device to support a dual system.

Moreover, according to an embodiment of the present invention, it is possible to implement synchronization by simply using only the SYNC PIO without requesting a counterpart to permit the use of a shared device. Accordingly, there are advantages in that material costs of final products can be reduced and purchaser's requirements can also be satisfied, thereby improving the quality of the product and enabling the secured technique to be applied to similar products.

Furthermore, according to an embodiment of the present invention, there is an advantage in a digital broadcast receiver with multiple tuners, in that a conditional access device with a single security device can be implemented.

## Claims

1. A system comprising a resource device (300) and a plurality of resource-user devices (100,200), a common signal path means connected to the resource device (300) and means for preventing simultaneous communication with the resource device (300) via the common signal path means by the resource-user devices (100,200), **characterized in that** the common signal path means is connected to each of said devices (100,200,300) and the means for preventing simultaneous communication with the resource device (300) comprises means provided in each resource-user device (100,200) for signaling its use of the common signal path means to the or each other resource-user device (100,200).

2. A system according to claim 1, wherein the resource-user devices (100,200) are coupled by an access notification signal path via which the resource-user devices (100,200) signal their use of the common signal path means.

3. A system according to claim 3, wherein each resource-user device (100,200) is configured for performing a resource device access process comprising:
determining from the state of access notification signal path whether the or each other resource-user device (100,200) is communicating with the resource device (300);
if the state of access notification signal path indicates that the or each other resource-user device (100,200) is not communicating with the resource device (300), setting the state of the access notification signal path to indicate that it is communicating with the resource device (300) and communicating with the resource device (300).

4. A method of sharing a device among at least two CPU systems, comprising:
setting interfaces of all the at least two systems to a floating state;
determining the status of a programmable input/output line (PIO) indicating whether it is possible to access the shared device;
setting the status of the PIO to an access-disable state;
changing the status of an interface of a first system, which intends to access the device, so that communications can be made between the first system and the shared device; and
transmitting and receiving data between the first system and the shared device.

5. The method as claimed in claim 4, further comprising:
setting the interface of the first system to the floating state after the transmitting and receiving step ; and
setting the status of the PIO to an access-allowable state.

6. The method as claimed in claim 4, wherein the PIO is a SYNC PIO.

7. The method as claimed in claim 4, wherein the access-disable state is a logic level low state and the access-allowable state is a logic level high state.

8. The method as claimed in claim 4, further comprising:
determining whether the status of the PIO is an access-allowable state following the determining step and preceding the step of setting the status of the PIO line;
waiting until the status of the PIO becomes the access-allowable state if it is determined that the status of the PIO is an access-disable state.

9. The method as claimed in claim 4, wherein the changed status of the interface of the first system is an alternative PIO.

10. The method as claimed in claim 4, wherein step of transmitting and receiving comprises:
generating a clock for driving the shared device and applying it to the shared device;
performing a hardware reset using a reset line to wake up the shared device; and
transmitting a command to the shared device and receiving results from the transmittal command.

11. The method as claimed in claim 4, wherein the shared device is a security device required for a conditional access system of a digital broadcast receiver.

12. An apparatus for sharing a device among at least two CPU systems, comprising:
a shared device adapted to be accessed by the at least two CPU systems;
a PIO adapted to be connected among the multiple systems and indicate whether it is possible to access the shared device; and
input/output lines adapted to be connected among the multiple systems and the shared device and further adapted to serve as a data transmission path wherein the input/output lines are set to a floating state when the multiple systems do not access the shared device, and the status of an interface is changed and set such that when one of the at least two CPU systems accesses the shared device, one of the CPU systems can access the shared device.

13. The device as claimed in claim 12, wherein the status of the PIO is adapted to be set to an access-allowable state while the at least two CPU systems do not access the shared device, and it is adapted to be set to an access-disable state while one of the at least two CPU systems is accessing the shared device.

14. The device as claimed in claim 12, wherein the changed status of the interface is an alternative PIO.

15. The device as claimed in claim 13, wherein the access-disable state is a logic level low state and the access-allowable state is a logic level high state.

16. The device as claimed in claim 12, wherein each of the at least two CPU systems comprises:
a means adapted to generate a clock for driving the shared device and further adapted to apply the generated clock to the shared device;
a means adapted to perform hardware reset using a reset line to wake up the shared device; and
a means adapted to transmit a command to the shared device and receiving results for the command.

17. The device as claimed in claim 12, wherein the shared device is a security device required for a conditional access system of a digital broadcast receiver.
